# EUROPEAN PATENT APPLICATION

(11) **EP 3 386 184 A1**
(43) Date of publication of application: **10.10.2018**
(21) Application number: 17165639.0
(22) Date of filing: 09.04.2017
(51) Int. Cl.: H04N 5/262, H04H 60/04, H04N 5/268, H04N 21/218, H04N 21/2187

(54) **CONTROL PANEL WITH TEMPLATES AND METHOD FOR OPERATING A CONTROL PANEL**

(71) Applicant: EVS Broadcast Equipment SA, 4102 Seraing (BE)
(72) Inventor: VOUNCKX, Johan, Dr., 3210 Linden (BE); VAFIDIS, Rachelle, 5080 Warisoulx (BE); PALFROY, Pacôme, 4000 Liege (BE)
(74) Representative: Rossmanith, Manfred

(57) **Abstract**

A method for operating broadcast production equipment is suggested. The broadcast production equipment comprises multiple video sources like cameras and stored video clips. The method executes an algorithm for generating a ranking of the video sources and presents the video sources based on the ranking for selection by an operator of the broadcast production equipment. In a first use case the broadcast production equipment is operated in a fully automatic manner allowing the operator to concentrate on other tasks like defining replays. The algorithms and rules for implementing the automatic operation are realized in templates defining the functionalities of the broadcast production equipment. The templates are adapted to the scenes of a currently running broadcast production. In a second use case the broadcast production equipment is operated in a half automatic manner requiring the confirmation of the operator for each proposed action. The suggested method enables a single operator to operate a complete broadcast production equipment by providing a contextualized and personalized interaction based on templates that are predefined interfaces and operations that match a specific event or a specific moment in the production script. According to a second aspect a control panel is suggested which is adapted for implementing the suggested method.

## Description

### Field

The present disclosure relates to a control panel for controlling production equipment for broadcast productions and to a method for operating broadcast production equipment.

### Background

In today's live broadcast productions, such as TV productions, a variety of production equipment devices (video/audio processing apparatuses) is needed to produce output feeds including a program output feed for broadcast. A production server stores all source video/audio material such as camera feeds and audio feeds from microphones recorded in a studio. The production server also stores intermediate video/audio material such as clips that have been prepared by the operator or automatically by background processes running on the production server. A video/audio mixer (production mixer) enables inputting various video/audio materials and combining these video/audio materials into one or more output feeds. Most mixers are equipped with keyers and matte generators to perform keying operations and to generate background signals which are also called mattes. A graphics engine allows generating combining and superimposing graphical elements into the video feeds. The production server also stores all final audio/video material such as the program output feed.

The mentioned and other functionalities are controlled by a production director entering commands into one or several control panels communicatively connected with the production equipment devices. The control panels include for instance a control panel for the vision mixer, an audio panel dedicated to control audio devices, a robotic camera panel if there are robotic cameras in the studio, and a panel like the "life slow motion" (LSM) control panel made by EVS ® for controlling a production server to define clips, cue points or replay speeds and to enable browsing through a video. The mentioned control panels are only examples and those familiar with broadcast equipment are aware that other types of control panels may be present in a studio as well.

All the functions needed for a production require a multitude of interactions and corresponding interfaces. It is not feasible for a single operator to control and interact with all these different interfaces. A straightforward solution would be to alternate between the different interfaces, but this is not realistic either. Indeed, the operator would need to switch at a too high frequency between the different interfaces. Moreover, there are interdependencies between the interfaces, making it necessary to use parts of the different interfaces simultaneously. Therefore, in a conventional TV studio a plurality of staff is needed to operate the production equipment: One or several LSM ("Live Slow Motion") operators define clips replays and select the replays. Normally, the production director operates the video mixer. An audio operator operates the audio devices and an additional person operates robotic cameras if such robotic cameras are in use in the studio.

Many times small broadcaster companies cannot afford such a big staff and therefore have to restrain themselves to simpler broadcast productions involving less broadcast production equipment. However, viewers tend to expect a certain level of sophistication of broadcast productions regardless of how small the event is, which is covered. Consequently, it is a competitive advantage for a broadcaster if the number of staff can be reduced without compromising the quality and complexity of a broadcast production.

Taking this as a starting point the present disclosure suggests a control panel enabling an operator to control the broadcast production in a more efficient way.

### Summary

According to a first aspect the present disclosure suggests a method for operating broadcast production equipment, wherein the broadcast production equipment comprises multiple signal sources including video and/or audio sources. The method comprises
- executing an algorithm for generating a ranking of the video sources; and
- presenting at least a subset of the video sources based on the ranking for selection by an operator of the broadcast production equipment.

In practice the method has the effect that the number of choices an operator for a broadcast production has to make is reduced, which requires fewer decisions of the operator and enables him to run a broadcast production alone. I.e. a single operator can make a broadcast production.

Advantageously, the video sources are presented to the operator of the broadcast production equipment in the order of their relevance for the current broadcast production. In the context of this feature the notion of relevance encompasses that the type of event, the regional and personal preferences of the operator are take into account.

In one embodiment the video sources are video cameras. In this case the method further comprises
- analysing the video images of the video cameras for generating the ranking of the video cameras. Image analysis techniques for this purpose range from standard detectors allowing finding and tracking specific objects in the video, to more complex machine learning based approaches, including neural networks. For the coverage of a sports event the analysis of the video images could be as simple as implementing the rule "follow the ball and then decide which camera has the best view on the ball" (e.g. using traditional algorithms) or this can include more complex approaches such as Rol (Region of Interest) based techniques that identify "interesting" parts in the image (e.g. based on motion in the image, or density of athletes, or other).

In a preferred further development of this embodiment the method further comprises
- executing an algorithm for automatically selecting one or several highest-ranking video cameras according to predefined rules; and
- outputting the video feed of the highest ranking video camera as program output feed. This particular implementation of the method permits an automatic broadcast production without requiring interventions of the operator. This is particularly advantageous when the operator has to focus on other tasks. It is noted that the ranking of cameras is calculated dynamically and changes with time as a production evolves or scenes in the production change.

In the context of the present disclosure the term video camera includes both real and virtual video cameras. A virtual video camera view is an extracted portion of the view of a high resolution and large field of view camera. The view of a virtual camera corresponds to the view of a regular real camera. The extraction of the image portion of the high resolution and large field of view camera is performed automatically. The extraction of the image portion includes the selection of the viewpoint of the virtual camera. Consequently, the method of the present disclosure encompasses likewise the ranking of virtual cameras.

In another embodiment the video sources are video clips. Then the method further comprises
- assigning weights to the video clips generating the ranking as a function of the weight assigned to each individual video clip according to a predefined rule. The video clips are presented to the operator in the sequence of their importance for the current broadcast production which simplifies the tasks of the operator.

In a preferred embodiment the method further comprises
- grouping algorithms, rules, control options and/or feedbacks into templates, wherein each template defines an operating state of the broadcast production equipment. The operating state defines different functionalities, algorithms and/or rules which are applied during the broadcast production. A broadcast production is composed of a set of typical situations where the operator needs to perform a specific combination of operations. These situations correspond for instance to phases in a game or to steps in a scripted production. Most conveniently the templates are adapted to the momentary needs in one of these situations during a broadcast production.

In view of that it has been found useful if the method further comprises
- separating the broadcast production into a sequence of concatenated scenes; and
- defining one template for each of the scenes.

The concept of templates is not limited to entire scenes but can be applied also to events within this scene. Therefore, the method may further comprise
- identifying one or a plurality of events within one or several scenes;
- defining a template for each event; and
- associating the defined template with the event. In this way it is possible to leverage the advantages of templates also on level of events.

The templates adapted to events and/or scenes entail that the control panel including its operator interface is automatically suited with the right control options and feedback options that are relevant in this specific part of the production as characterized by the template and the event.

In a useful embodiment, the method further comprises
- performing the definition of templates during design time of a broadcast production; and
- executing the defined templates during run-time of the broadcast production.

This approach has the advantage that a significant part of the work of the operator is moved from run-time of a broadcast production to the designtime. In this way, the method according to the present disclosure enables a single operator to run a complete broadcast production simply because many tasks have already been done before the actual broadcast production starts.

According to a second aspect the present disclosure suggests a control panel for controlling broadcast production equipment, comprising
- control elements receiving user input and convert the user input into commands to be executed by the broadcast production equipment, and
- a processor enabling interchanging the control panel into a plurality of predetermined operating states defined by templates. The templates control the broadcast production equipment. The control panel is adapted for implementing the method according to the present disclosure.

The template mechanism changes the complete interaction of the operator with the control panel. By means of the templates adapted to a specific scene or event, only a subset of available controls and interactions is presented to the operator. The subset is limited to those controls and interactions which are needed to realize the actions required in the specific template corresponding to a typical situation.

It has been found useful if the control panel controls the functionalities of the broadcast equipment including itself. In other words, the operator enters into the control panel all necessary inputs to define a desired setting of the broadcast production equipment.

Advantageously, the templates control a user interface of the control panel including options offered to the user. In this way it is possible information and options to the operator according to their importance relative to a current broadcast production to facilitate the tasks of the operator.

In a convenient variant the control panel is provided with a display and wherein the template determines what kind of information is displayed.

In one embodiment the templates determine how the information is rendered to the user. This is very convenient for the operator because he can implement his individual preferences, i.e. whether information is presented as alphanumeric or graphic information or by changing the colour of the control light etc.

In a convenient embodiment the control panel is adapted for receiving a user input for switching from one operating state into another operating state. This feature gives the operator full control over the broadcast production equipment. The operator has the option to intervene at any time.

In an advantageous development the processor executes an algorithm analysing the context of the broadcast production by determining which scene in the broadcast production is active. Based on this context analysis it is possible to select the appropriate template.

It has been found very useful to connect the control panel with a database storing a multitude of templates for the control panel. In this way the operator has access to many already existing templates which potentially enhances his productivity a lot.

In an embodiment the control panel provides for a user interface enabling programming of the template. This puts the operator in a position, where he can always change, adapt and redefine existing templates or create a completely new template that meets the requirements of his creative concept.

### Brief Description of Drawings

Exemplary embodiments of the present disclosure are illustrated in the drawings and are explained in more detail in the following description. In the figures the same or similar elements are referenced with the same or similar reference signs. It shows:
- Fig. 1A: a schematic illustration of a broadcast production studio;
- Fig. 1B: a schematic illustration of the relation between production, scenes and events;
- Figs. 2: schematically displays equipment and facilities in a sports stadium
- Figs. 3A, 3B: show two different concepts of templates;
- Fig. 4: is a flow diagram of a method for preparing a broadcast production;
- Figs. 5: is a flow diagram of a method for implementing a broadcast production according to the present disclosure;
- Figs. 6A-6C: a presentation of subsets of cameras, clips and controls; and
- Figs. 7A-7E: shows a camera setup covering a volleyball field.

### Description of Embodiments

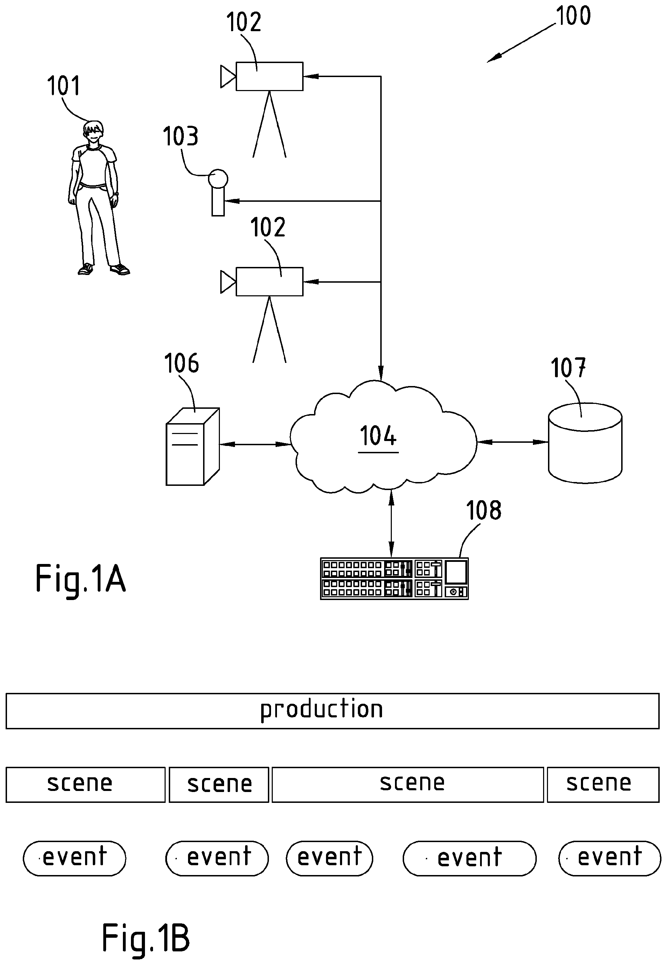

Fig. 1 is a simplified schematic diagram of a broadcast production studio 100. In the studio 100 a moderator 101 is captured by two cameras 102. The voice of the moderator 101 is recorded by a microphone 103. The cameras 102 and the microphone 103 are also called input devices because they provide the video and audio input feeds, respectively, to a studio network 104 connecting all studio equipment. The studio network 104 is a wired or wireless network communicating video/audio data, meta-data and control data between the studio production equipment. The meta-data include for example settings of the camera corresponding to a video feed. A production server 106 stores all video/audio data as well as meta-data and, in addition to that, intermediate video/audio material such as clips that have been prepared by the operator or automatically by background processes running on the production server. The database 107 stores clips and other video/audio material to make it available for a current broadcast production. Even though the database 107 is shown in Fig. 1 as a separate device it may as well be integrated in the production server 106.

A production director or operator operates a video/audio mixer 108 (production mixer) to control the broadcast production equipment and to realize his creative concept of the broadcast production. The production mixer is provided with a control panel having a large number of control elements like buttons, T-bar us, jog dials, sliders receiving inputs from an operator which are converted into commands for the production equipment. The control panel of the production mixer is also provided with a plurality of displays for indicating status information, operating parameters etc., for the operator. The functionalities of the control elements and the displays are programmable and, hence, adaptable during the course of a broadcast production.

It is noted that a typical broadcast production studio also contains further equipment such as graphics engine, keyers, matte generators etc. and more cameras than shown in Figure 1. In consequence, the broadcast production director is not in a position to control all production devices that are needed to produce a complex broadcast production. Conventionally, this situation is dealt with by employing several operators collaborating in the studio 100 to orchestrate the equipment required for a complex broadcast production.

The control panel and the method according to the present disclosure offer an alternative approach by introducing the concept of interface and information contextualization. This concept supports the production director and will be explained in greater detail in the following.

Every broadcast production can be divided into a sequence of scenes, wherein each scene corresponds to a specific portion of the broadcast production. For example a soccer game can be divided into the following sequence of scenes:
- Scene 1:: Before the game starts (interviews with players, trainer, and other persons; re-playing of archive material; ...)
- Scene 2:: During first half-time;
- Scene 3:: During pause;
- Scene 4:: During second half-time;
- Scene 5:: After the game.

In addition to these mandatory scenes many soccer games will have additional optional scenes:
- Scene 6:: Prolongations;
- Scene 7:: Penalties series.

Within the scene there are one or several events having a shorter time duration than the associated scene. The relation between a broadcast production, scenes and events is illustrated in Fig. 1 B.

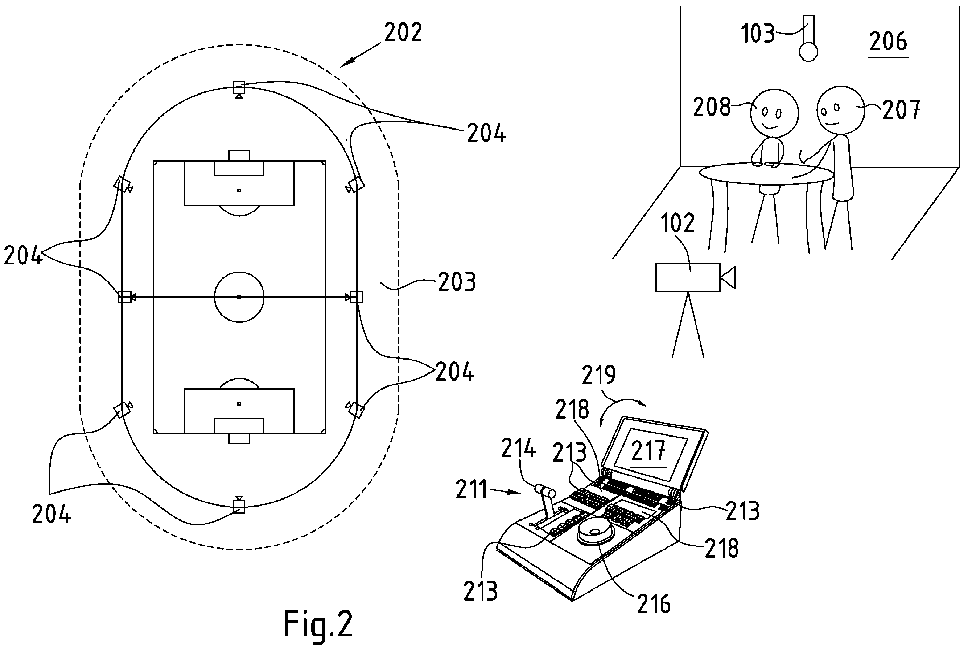

In each of the scenes 1 to 7 different activities are to be covered by the broadcast production and, hence, the production requirements in terms of the cameras and other production equipment are different. This will be explained in greater detail with regard to Fig. 2.

Fig. 2 exhibits a football (soccer) field 201 in a stadium 202. The football field 201 is surrounded by the ranks 203 for the spectators. Between the football field 201 and the ranks 203 a plurality of cameras 204 are located to capture the action on the field 201. Fig. 2 shows eight cameras. However, the present disclosure is not limited to a specific number of cameras, i.e. it is equally applicable in stadiums being equipped with more or fewer cameras and/or with special high resolution and/or large field of view cameras. The cameras may be fixedly installed or maybe installed only when a specific event is to be covered. The cameras 204 are regular broadcast cameras and each of them captures a different part of the soccer field. Therefore, the production director will need to switch between different cameras during a game in order to capture the best scenes in the game. For example during a penalty only the part of the soccer field 201 is interested where the penalty is executed.

In a situation when a special high resolution and/or large field of view camera is installed in the stadium, the operator needs to select a specific image portion corresponding to a virtual camera. But for illustration purposes the description will be focused on normal cameras in the following even though the concept of the present disclosure is applicable to high resolution and/or large field of view cameras as well.

The camera feeds of all cameras 204 are transferred to a studio room 206 in the stadium 202. In the studio room 206 a reporter 207 comments game during the first and second half-time. During a pause of the game the reporter 207 interviews a special guest 208 in the studio like an expert. For the interview additional cameras and microphones are installed to capture the interview. For the sake of simplicity Fig. 2 only shows a single camera 102 and a single microphone 103. As the game evolves from scene to scene the production director needs to switch between different devices of the broadcast equipment and make appropriate adaptations such as switching between different cameras, changing pan, tilt and zoom of cameras, switching microphones etc.

All required settings of the production equipment are entered by the operator into a control panel 211 shown on the bottom of Fig. 2. The control panel 211 is provided with a plurality of control elements, such as buttons 213, a T-bar 214 and a jog-dial 216. The control panel 211 comprises a pivotable display 217 to indicate information to the operator of the control panel 211. Some of the control elements are associated with small displays 218 to indicate e.g. status information of an associated controlled device. The control panel 211 is equipped with a processor performing processes that define functionalities of the control panel.

For supporting the production director the control panel according to the present disclosure is switched into different operating states which are defined by templates. A template determines the functionalities enabled by the control panel and the visual feedback of the control panel to the operator or production director. The templates also determine visual feedback to the operator on other devices like screens, touch panels and/or monitors.

Each time when the production moves to a new scene, a new template is loaded into the control panel. The loading of a template is triggered by an operator interaction or by an external command which is sent by an automation system for example. Since most productions are pre-scripted, i.e. the scenes of the production are defined beforehand, it is possible to define templates associated with the different scenes beforehand as well. The templates are then stored for later use in a database. Templates for generic scenes appearing in various kinds of broadcast productions can be reused in any of these productions and thus enhance production efficiency of broadcasters and production houses. Technically speaking templates are classes in object oriented programming. The properties associated with classes allow for a convenient implementation of the template concept.

In a consequent further evolution of the notion of scenes, being a logical step in a complete production, and associated templates is pushed further towards shorter time events inside of the scene. Again with reference to a soccer game such a dynamic event is e.g. a corner, a free kick or the like. Each event comes along with specific and pre-scripted set of requirements in terms of which camera and which settings of the camera are to be used, video mixing actions that are likely to happen and other foreseeable settings that might be needed. As such each event is associated with a specific template. The templates are dynamically called up when the event occurs. The operator receives the visual feedback from the template indicating which template, scene and/or event is currently active in the ongoing broadcast production. In one embodiment the visual feedback is provided on the display 217.

In case of an event within a scene, a template becomes a well-defined sequence of actions. An exemplary template includes the sequence of the following actions: "selecting a camera", "getting a clip", "selecting a graphic overlay", "triggering the video insertion of the clip".

At the same time the template is used to enable performing complex tasks with a single pre-programmed keystroke. E.g. the operator can call up a replay of a potential offside situation in a soccer game and overlay the scene with graphics showing lines on the field and relative positions of different players in the scene. A complete parametrizable graphical design can be made upfront. A single key-stroke of the operator triggers the real-time binding between the upfront made graphical design and the real-time video. In this way a template abstracts the control of the broadcast production from the functionality and operations of the underlying hardware like selecting the right sources and appropriate mixing operations between the sources to obtain the desired result.

In another application example the graphical design could be a slide show illustration a voting result and how this translates into seats in a parliament. The real-time video could be a reporter who discusses the result with a politician at some outside location while at the same time the graphical design is keyed into the real-time video. In a further development the template concept involves video mixing where for instance transitions and side-by-side display of two video sources are defined upfront.

A basic template provides for a contextualized interface and contextualized information that the control panel offers to the operator. The concept of templates is a hierarchical concept, i.e. several concatenated templates form a control flow of basic templates implementing a sequence of operations.

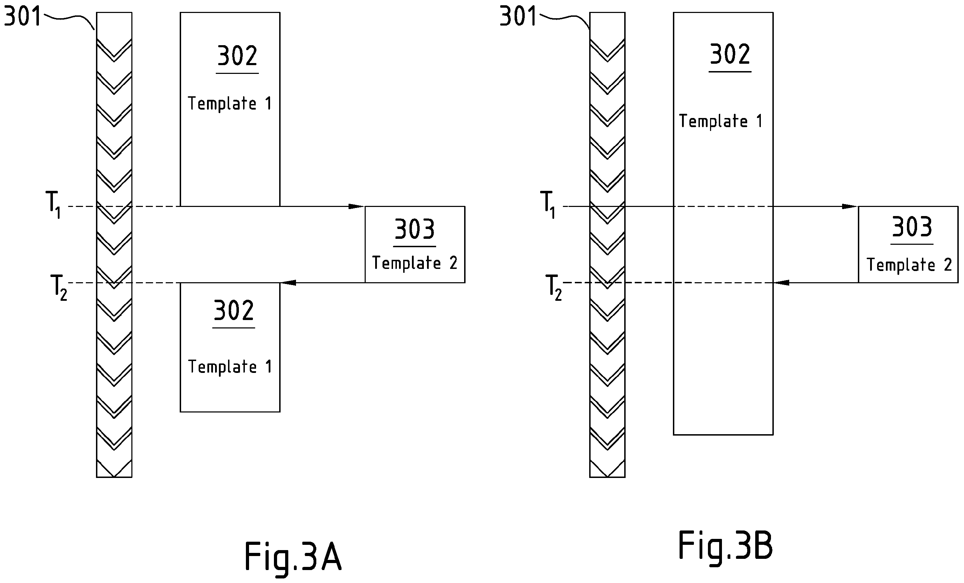

Figure 3A illustrates one example of the hierarchical concept of templates. Bar 301 symbolizes a time line in which the time evolves from top to bottom in Figure 3A. Template 1 symbolized by bars 302 defines the settings of the broadcast equipment in a studio, in which a moderator leads an audience through a program, e.g. a news program covering voting results in an election. The execution of template 1 is stopped at a time T1 and the execution date template 2 shown as bar 303 begins. Template 2 selects a camera at an outside location, such as Brussels, where the interviewer interviews a politician. Switching from template 1 to template 2 at time T1 is performed by a single keystroke. In response to another keystroke the execution of template 2 is stopped at time T2 and the execution of template 1 is resumed, i.e. the broadcast program switches from the outside location back to the studio.

Figure 3B illustrates an alternative implementation, in which templates 1 and 2 are executed simultaneously. Specifically, the illustrated situation may refer to a broadcast program, in which a mixing operation puts the moderator in the studio and the interviewer at the outside location into a side-by-side configuration to directly involve the moderator in the ongoing interview.

The use of templates moves a significant part of the broadcast production from the live production away and towards the preparation of the production. Templates are defined upfront and then executed or "played" during a live broadcast production.

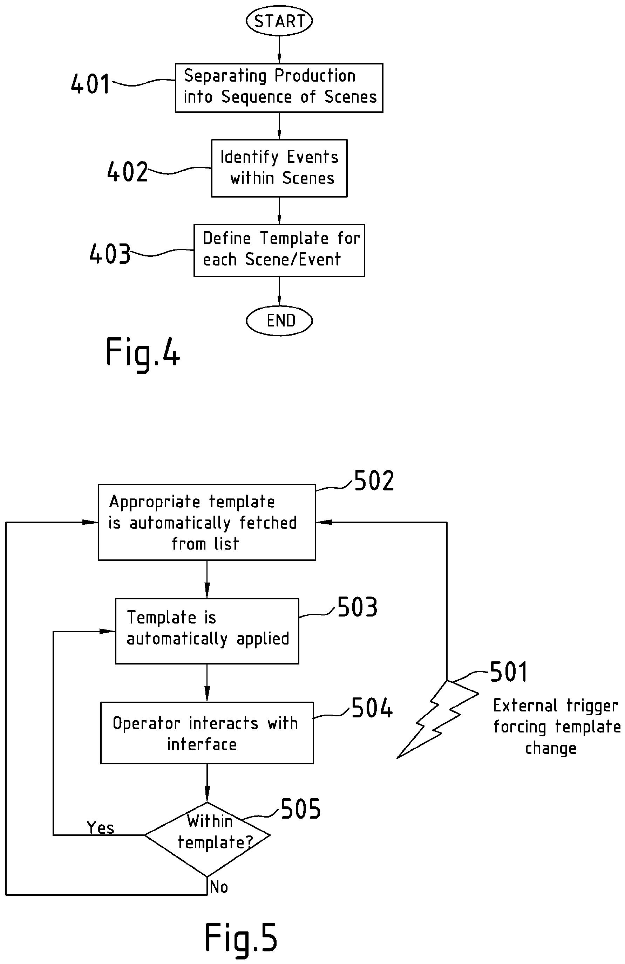

Figure 4 shows the flow diagram illustrating activities for preparing a broadcast production according to a method of the present disclosure. The broadcast production is realized by using the concept of templates. In a first step 401 the intended broadcast production is separated into a sequence of scenes. This step is performed either individually for each broadcast production or for an entire group of similar productions like news programs, which normally are strictly structured into scenes, e.g. introduction, global news, local news, sports, and weather. Different news programs of one broadcaster may have a different appearance but share the same structure. In this case it makes sense to define scenes which are common to all news programs of this broadcaster. In a next step 402 events are identified within scenes. However, a scene does not necessarily contain an event. A typical event is a penalty during a soccer game. In step 403 templates for each scene and each event are defined.

The templates define the interface presented to the operator. Options that are likely to be selected by the operator are put in the forefront of the interface, i.e. cameras which are likely to be to be selected or clips that are probably needed can be invoked with a single keystroke while other actions are not so easily accessible. A set of default templates is defined upfront, for instance for specific sports events or news production. Most of the times, the broadcast equipment is used by multiple users or operators. Advantageously the users or operators are enabled to define and manage their own templates including defining a new template, editing or deleting an existing one, and share templates with other users. To do so, the user or operator uploads a new template into a sharing environment such as a database or downloads a template he is interested in from the database. During the preparatory work for a broadcast production the user builds a list of templates enabling to run the production based on executing the sequence of templates. I.e. the templates are defined at design time when the preparatory work is done, whereas at runtime the templates are "played back" based upon either the progress of the production, or the detection of an event, or a manual action of the operator as it will be explained further below.

After all preparatory work is finished the actual production can be launched at any time which marks the beginning of the production time. Fig. 5 exhibits production time activities as a schematic flow diagram. In the embodiment shown in Fig. 5 the production process is triggered by an external event, e.g. the start of a game. This event represents an external trigger 501, whereby in step 502 an appropriate template is automatically fetched from the list of templates which were prepared for this particular production. In another broadcast production, the external trigger is information that is received from other sources like the sports information channel, Internet feeds or the like. In one embodiment the external information representing the external trigger event 501 is generated by image analysis technologies detecting a specific event in a game or sports event. Alternatively, the external trigger 501 is generated by the operator himself pushing a button on the control panel. The use of a specific content that is linked to a template, the explicit use of a template or the linking of a template to a specific source also serve as external trigger events.

After the template has been fetched in step 502 it is automatically applied (step 503) and results in a contextualized user interface and contextualized information for the operator. The template contains all relevant settings concerning configurations, display, interface, and recommendations for the control panel corresponding to a specific scene or event at the beginning and completion of the scene or event as well as during the scene or event. The configurations and settings include specific interface settings, specific actions that can be performed by the operator, sequences of actions to be performed, and adaptation of content recommendations. The latter will be explained in further detail below. By these measures the interface is adapted effectively to the instantaneous needs of the operator. The operator interacts with the user interface (step 504). In decision block 505 it is determined whether the operator remains with his interactions with in the currently applied template. Remaining with the currently applied template means that the operator performs only those actions offered by this particular template. If yes, the currently applied template continues to be applied. If no, then the process returns to step 502 and the next appropriate template is fetched from the list of templates.

For supporting the operator contextual information and suggestions are presented to the operator. For example, the operator has to select a video/audio source for the production. That means the operator needs to select a camera for display or a clip he wants to replay. The present disclosure suggests an interface which reduces the options to those video/audio assets and sources that matter for the current broadcast production by sorting the video/audio assets and sources as a function of how likely it is that they are used in the broadcast production. In this way the efficiency of the operator is largely increased because of the number of choices is reduced. In particular, the choices are reduced according to rules. In this way a single operator can run a complete broadcast production.

With regard to cameras a set of image analysis techniques is used to rank the images and a camera angle is selected based on automation techniques. Cameras are to be understood as real and/or virtual cameras.

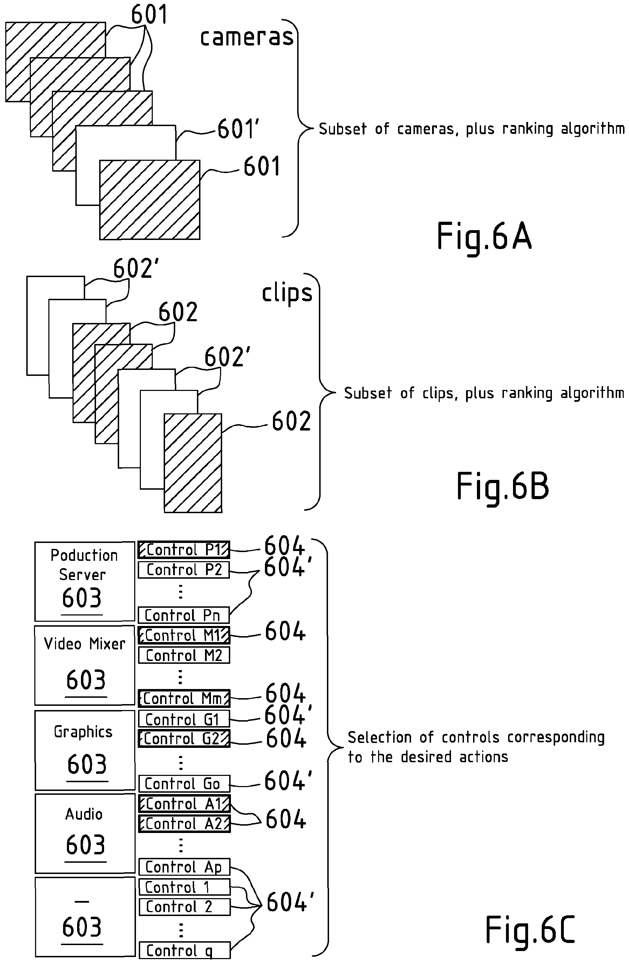

Fig. 6A illustrates one example how cameras are presented in a user interface to an operator for selection. Each camera is presented as an icon 601, 601'. Image analysis techniques are applied to the images of all cameras. The image analysis techniques for this purpose range from standard detectors allowing finding and tracking specific objects in the video, to more complex machine learning based approaches, including neural networks. The presentation shown in Fig. 6A is generated by applying a rule how cameras should be presented. E.g. in a soccer game the main camera is used most of the time, whereas the other cameras are used in case of specific actions, when a close-up is needed, for instance. E.g. in a basketball game there is a maximum allowed time between entering the field and an attempt to score. This game rule gives a hint which camera is probably needed next.

The rules allow for tuning the output based on the kind of production. Since a production is an artistic activity, different regions and viewers have different preferences. The rules can be tuned to that specific preference, e.g. in terms of the amount of camera view changes, in terms of the average duration of a camera view, in terms of the most commonly used field of view or whatever is deemed to be useful. Once defined, the rules are included as predefined rules in templates, which can be called up and used during a production.

The operator can choose how the available cameras are presented, e.g. all cameras are shown in sorted order, only top-ranked cameras are shown or the top n cameras are shown. Alternatively, all cameras are shown and the top ranked cameras are highlighted. In the example shown in Fig. 6A the highlighted cameras are symbolized with hatched icons 601. The camera associated with icon 601' does not belong to the group of top ranked cameras and therefore icon 601' is not highlighted. Other ways of presentations are possible.

With regard to clips the sorting of already defined clips is based on events that happened and in the scenes, such as the position of a player in a game, and/or what happened during the execution of a template. E.g. when a scene or template is paused, then the clips are sorted based on a relative weight assigned to a specific event, such as a goal, penalty or the like. The relative weights are assigned to the events during the preparatory work. But when the scene or template goes on, then the clips are sorted in a "most recently first" order. Other ways of presenting the clips can be defined by users depending on the sport.

Fig. 6B illustrates the sorting of clips symbolized by icons 602, 602'. Some clips associated with icons 602 are identified as important and are highlighted shown by hatched icons 602 while the clips associated with icons 602' are found to be less important and are not highlighted.

Finally, Fig. 6C illustrates the presentation of control options for controlling broadcast production devices symbolized by icons 603 to an operator. A currently active template highlights only those control options that are most probably relevant for the current situation. The highlighted control options are shown as icons 604 with a bold frame while the icons 604' that are associated with control options that are probably not relevant are not highlighted.

In an alternative embodiment only the relevant and important items are shown on the user interface, while all other items are not shown at all. The operator can choose this in the settings according his preferences.

The concept of templates further encompasses the automation of manual work. According to a first aspect this involves an automatic selection of the camera position to ensure that the most suitable images are generated providing the best view on a game. In a first embodiment the automatic camera positioning is implemented by sending positioning instructions to a camera based on sensor information giving the position of players and/or relevance of objects like a ball in a game or a goal. Depending on the sport a template is defined that determines the camera position. The actual positions of the cameras are matched with the template so the template knows which camera looks into which direction. In this way, the cameras are linked with certain typical views and the operator does not keep in mind which camera has to be used to achieve a certain view. Fig. 6 illustrates this concept is on the example of a volleyball game.

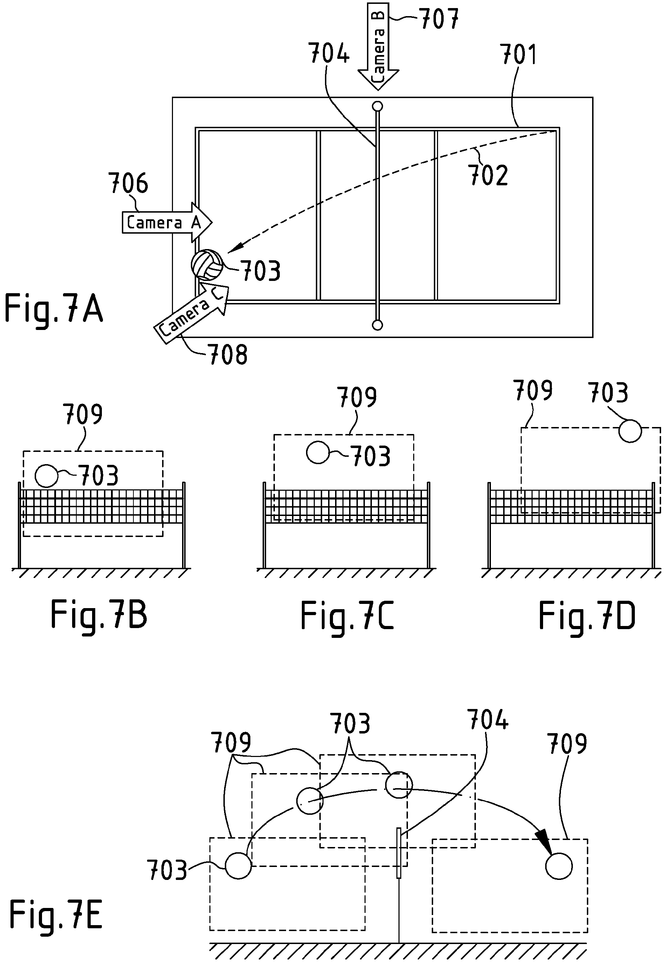

Fig. 7A shows a volleyball field 701 and a trajectory 702 of a volleyball 703 across a volleyball net 704. Cameras A, B, and C are positioned around the volleyball field 701. The viewing directions of cameras A, B, and C are indicated by respective arrows 706, 707, and 708. In a first example an automatic positioning algorithm applies the principle "follow the ball". Figs. 7B to 7D show the images taken by camera A when the ball follows the trajectory 702. Dashed rectangles 709 indicate in Figures 7B to 7D the viewing field of camera A. Apparently, the automatic camera positioning redirects the viewing direction of camera A but in Fig. 7D the volleyball ball 703 begins to exit the viewing field of camera A. At this moment, the operator is likely to switch from camera A to camera B. Fig. 7E shows the same passage of the volleyball 703 along the trajectory 702 as seen by camera B. Again, dashed rectangles indicate how the viewing field of camera B is adjusted as the volleyball 703 flies across the net 704. Camera C has an intermediate perspective between the perspectives of camera A and B. However, the viewing field of camera C is not shown in Figs. 7B to 7E.

In another embodiment the human selection of the appropriate camera is replaced by an algorithm that selects the camera automatically including the optimal camera angle. This can be implemented by detecting the position of players and objects in the scene with respect to one or several cameras. In an alternative approach an algorithm analyses the image content of all cameras to identify the most suitable camera and the most appropriate settings.

In yet another embodiment the volleyball field is captured with a 360° camera and an algorithm selects the position and settings of virtual cameras by extracting a certain portion of the camera feed of the 360° camera. The extraction from the 360° camera feed is easily implemented by the above-mentioned principle "follow the ball" or follow the player X.

For the so far described production process there are three main use cases. The first use case is a fully automatic approach allowing the operator to concentrate on other tasks like defining replays. This use case is particularly relevant in situations when nothing important happens on the playing field that requires the attention of the operator. Nevertheless, the automatic process assures a decent program output stream. The second use case focuses on proposing certain actions to the operator and helping the operator to perform a broadcast production. However, in this use case the system does not execute any actions automatically but rather always waits for the approval of the operator. Finally it is still possible to run the broadcast production fully manually like with conventional broadcast equipment.

Reference herein to "one embodiment" or "an embodiment" means that a particular feature, structure, or characteristic described in connection with the embodiment can be included in at least one implementation of the disclosure. The appearances of the phrase "in one embodiment" in various places in the specification are not necessarily all referring to the same embodiment, nor are separate or alternative embodiments necessarily mutually exclusive of other embodiments.

While the disclosure may be susceptible to various modifications and alternative forms, specific embodiments have been shown by way of example in the drawings and will be described in detail herein. However, it should be understood that the disclosure is not intended to be limited to the particular forms disclosed.

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The embodiments described below comprise separate devices to facilitate the understanding of different functional group of the present disclosure. However, it is to be understood that some devices may very well integrated in a single device.

**Reference Signs List**

| | | | |
|---|---|---|---|
| 100 | studio | 601, 601' | icon |
| 101 | moderator | 602, 602' | icon |
| 102 | camera | 603 | icon |
| 103 | microphone | 604, 604' | icon |
| 104 | studio network | 701 | volleyball field |
| 106 | production server | 702 | trajectory |
| 107 | database | 703 | volleyball |
| 108 | mixer | 704 | volleyball net |
| 201 | soccer field | 706 | camera A |
| 202 | stadium | 707 | camera B |
| 203 | ranks | 708 | camera C |
| 204 | cameras | 709 | viewing field |
| 206 | studio room | | |
| 207 | reporter | | |
| 208 | special guest | | |
| 211 | control panel | | |
| 213 | buttons | | |
| 214 | T-bar | | |
| 216 | jog dial | | |
| 217 | display | | |
| 218 | small display | | |
| 219 | arrow | | |
| 301 | time bar | | |
| 302 | template 1 | | |
| 303 | template 2 | | |
| 401 to 403 | method steps | | |
| 501 | external trigger | | |
| 502 to 504 | method steps | | |
| 505 | decision block | | |

## Claims

1. Method for operating broadcast production equipment, wherein the broadcast production equipment comprises multiple signal sources including video and/or audio sources (102, 103, 204), the method comprising
- executing an algorithm for generating a ranking of the signal sources; and
- presenting at least a subset of the signal sources based on the ranking for selection by an operator of the broadcast production equipment.

2. Method according to claim 1, wherein the video sources are video cameras (102, 204), the method further comprising
- analysing the video images of the video cameras for generating the ranking of the video cameras.

3. Method according to claim 2, wherein the video sources are video cameras, the method further comprising
- executing an algorithm for automatically selecting one or several highest-ranking video cameras (102, 204) according to predefined rules; and
- outputting the video feed of the highest ranking video camera as program output feed.

4. Method according to claim 1, wherein the video sources are video clips, the method further comprising
- assigning weights to the video clips (602, 602') generating the ranking as a function of the weight assigned to each individual video clip according to a predefined rule.

5. Method according to one of the preceding claims, the method further comprising one or several of the following
- grouping algorithms, rules, control options and/or feedbacks into templates, wherein each template defines an operating state.

6. Method according to one of the preceding claims, the method further comprising
- separating (401) the broadcast production into a sequence of concatenated scenes; and
- defining (403) one template for each of the scenes.

7. Method according to claim 6, further comprising
- identifying (402) one or a plurality of events within one or several scenes;
- defining (403) a template for each event; and
- associating the defined template with the event.

8. Method according to at least one of claims 5, 6 and 7, further comprising
- performing the definition of templates during design time of a broadcast production; and
- executing the defined templates during run-time of the broadcast production.

9. Control panel for controlling broadcast production equipment (102, 103, 106, 108), comprising
- control elements (213, 214, 216) receiving user input and convert the user input into commands to be executed by the broadcast production equipment, and
- a processor enabling interchanging the control panel (211) into a plurality of predetermined operating states defined by templates, wherein the templates control the broadcast production equipment.

10. Control panel according to claim 9, wherein the control panel (211) controls the functionalities of the broadcast equipment (102, 103, 106, 108) including itself.

11. Control panel according to claim 10, wherein the templates control a user interface of the control panel (211) including options offered to the user.

12. Control panel according to one of the preceding claims, wherein the control panel is provided with a display (217, 218) and wherein the template determines what kind of information is displayed.

13. Control panel according to one of the preceding claims, wherein the templates determine how the information is rendered to the user.

14. Control panel according to one of the preceding claims, wherein the control panel (211) is adapted for receiving a user input for switching from one operating state into another operating state.

15. Control panel according to claim 14, wherein the processor executes an algorithm analysing the context of the broadcast production by determining which scene in the broadcast production is active.

16. Control panel according to one of the preceding claims, wherein the control panel is connected with a database (107) storing a multitude of templates for the control panel.

17. Control panel according to one of the preceding claims, wherein the control panel (211) provides for a user interface enabling programing of the template.
